# EUROPÄISCHE PATENTSCHRIFT

(11) **EP 3 435 697 B1**
(45) Veröffentlichungstag und Bekanntmachung des Hinweises auf die Patenterteilung: **02.12.2020**
(21) Anmeldenummer: 18184719.5
(22) Anmeldetag: 20.07.2018
(51) Int. Cl.: H04W 12/06, H04L 29/06, H04W 4/80

(54) **VERFAHREN ZUR AUTHENTISIERUNG EINES NUTZERS GEGENÜBER EINEM DIENSTEANBIETER UND AUTHENTISIERUNGSEINRICHTUNG**
METHOD FOR AUTHENTICATING A USER AGAINST A SERVICE PROVIDER AND AUTHENTICATION SYSTEM
PROCÉDÉ D'AUTHENTIFICATION D'UN UTILISATEUR CONTRE UN FOURNISSEUR DE SERVICES ET SYSTÈME D'AUTHENTIFICATION

(30) Priorität: 25.07.2017 DE 102017212696
(43) Veröffentlichungstag der Anmeldung: 30.01.2019
(60) Teilanmeldung: 20201697.8
(73) Patentinhaber: Bundesdruckerei GmbH, 10969 Berlin (DE)
(72) Erfinder: Schwarz, Carsten, 13465 Berlin (DE); Hill, Jan, 10249 Berlin (DE)
(74) Vertreter: Glawe, Delfs, Moll

(56) Entgegenhaltungen:
- DE-A1-102010 028 133
- US-A1- 2017 094 513

## Beschreibung

### Technisches Gebiet

Die vorliegende Erfindung betrifft ein Verfahren zur Authentisierung eines Nutzers gegenüber einem Diensteanbieter mittels eines elektronischen Ausweiselements des Nutzers und eine Authentisierungseinrichtung.

### Beschreibung des Standes der Technik

Verfahren zur Authentisierung, d.h. zur Überprüfung der Authentizität eines Nutzers bzw. Kommunikationspartners mittels eines elektronischen Ausweiselements, sowie zur Durchführung derartiger Verfahren geeignete Authentisierungssysteme bzw. -dienste sind bekannt.

Ein bekanntes Beispiel eines elektronischen Ausweiselements ist der von der Bundesrepublik Deutschland ausgegebene elektronische Personalausweis, der einen RFID-Chip enthält, der verschiedene Formen der elektronischen Authentisierung ermöglicht. Der Nutzer dieses Ausweises kann im Internet mittels einer "AusweisApp" genannten Anwendung den gleichen Identitätsnachweis liefern, wie ihn der Ausweis als Sichtdokument außerhalb des Internets bietet. Der Nutzer kann sich somit im elektronischen Geschäfts- bzw. Rechtsverkehr gegenüber Dritten eindeutig und authentisch ausweisen. Ein (privatrechtlicher oder behördlicher) Diensteanbieter, der seinen Kunden die Möglichkeit der Authentisierung mittels des elektronischen Personalausweises anbietet, benötigt hierfür ein von der Vergabestelle für Berechtigungszertifikate ausgestelltes Berechtigungszertifikat. Zudem benötigt er als elektronischen Authentisierungsdienst einen sogenannten eID-Server, den er entweder selbst betreiben oder von externen Dienstleistern mieten kann.

Die DE 10 2010 028133 A1 betrifft ein Verfahren zum Lesen von Attributen aus einem einem Nutzer zugeordneten ID-Token.

In der US 2017/094513 A1 wird ein Identitäts-Management-Verfahren beschrieben, bei dem der Nutzer sich gegenüber Servicestellen ausweisen kann.

Zur Nutzung der elektronischen Ausweisfunktion benötigt der Nutzer an seinem stationären PC (Nutzerendgerät) üblicherweise ein Kartenlesegerät. Eine Kommunikation zwischen Ausweis und einem geeigneten "Smartphone" (Mobiltelefon mit umfangreichen Computer-Funktionalitäten) ist aber auch mittels der sogenannten Nahfeldkommunikation (NFC: englisch "Near Field Communication") möglich.

### Zusammenfassung der Erfindung

Ausgehend hiervon werden erfindungsgemäß ein Verfahren zur Authentisierung eines Nutzers gegenüber einem Diensteanbieter mittels eines elektronischen Ausweiselements mit den Merkmalen des Anspruchs 1 und eine entsprechende Authentisierungseinrichtung mit den Merkmalen des Anspruchs 9 vorgeschlagen. Die Erfindung betrifft darüber hinaus ein Verfahren zum Betreiben eines Servers eines Diensteanbieters zur Authentisierung eines Nutzers sowie ein Verfahren zum Betreiben eines elektronischen Authentisierungsdienstes zur Authentisierung eines Nutzers mit den Merkmalen der Ansprüche 2 bzw. 5 und einen entsprechenden Diensteanbieter-Server mit den Merkmalen des Anspruchs 10 und einen Authentisierungsserver mit den Merkmalen des Anspruchs 11.

Die Erkenntnis der Erfindung liegt darin begründet, zum Aufbau einer gesicherten Verbindung zwischen einem stationären Nutzerendgerät und einem Diensteanbieter mittels Ausweis-Authentisierung anstelle eines nicht stets zur Verfügung stehenden Kartenlesegeräts ein in der Regel vorhandenes mobiles Nutzerendgerät (vulgo Smartphone) zu nutzen. Dadurch ermöglicht es die Erfindung, dass sich ein Nutzer in einer Anwendung, die er an einem klassischen stationären Nutzerendgerät, wie bspw. einem Desktop-PC, nutzt, gegenüber einem die Anwendung anbietenden Diensteanbieter identifizieren bzw. authentisieren kann, ohne dass er über ein (kompatibles) Kartenlesegerät verfügen muss. Vielmehr erfolgt das Auslesen des hoheitlichen Dokuments mittels eines NFC-tauglichen mobilen Endgeräts (Smartphone, Tablet o.dgl.), das über eine Kontaktnummer (Telefonnummer) verfügt. Erfindungsgemäß muss dabei das elektronische Ausweiselement nicht durch das mobile Endgerät direkt ausgelesen werden, sondern das mobile Endgerät dient als Kommunikationsverbindung für einen direkt zwischen den Ausweiselement bzw. dessen Chip und dem Authentisierungsdienst bzw. Authentisierungsserver aufzubauenden sicheren Verbindung.

Der eigentliche (und an sich bekannte) Authentisierungsvorgang erfolgt somit zwischen dem Ausweiselement und dem elektronischen Authentisierungsdienst des Diensteanbieters über einen durch das mobile Endgerät bereitgestellten Kommunikationskanal, während die anschließende authentisierte Transaktionsverbindung zwischen dem Server des Diensteanbieters und dem stationären Endgerät des Nutzers zustande kommt.

Um den Authentisierungsvorgang anzustoßen, teilt der Nutzer dem Diensteanbieter die Telefonnummer/Kontaktnummer des fraglichen mobilen Endgeräts (Mobilnummer) mit. Daraufhin werden auf dem Server des Diensteanbieters ein Geheimnis sowie ein dem Vorgang zugeordneter Identifizierer erzeugt. Diese werden zusammen mit einem Hyperlink an die übermittelte Mobilnummer übermittelt. Bspw. können das Geheimnis und/oder der Identifizierer in den Hyperlink integriert sein.

Der übermittelte Hyperlink ist zum Aufbau einer sicheren Verbindung mit einem elektronischen Authentisierungsdienst ausgelegt, so dass der Nutzer des empfangenden mobilen Endgeräts in die Lage versetzt wird, anhand des empfangenen Hyperlinks eine derartige sichere Verbindung zwischen seinem mobilen Endgerät und dem Authentisierungsdienst herzustellen. Zudem übermittelt der Nutzer auch das empfangene Geheimnis und den empfangenen Identifizierer an den elektronischen Authentisierungsdienst. Letzteres erfolgt automatisch, wenn das Geheimnis und der Identifizierer wie voranstehend erwähnt in den Hyperlink integriert sind.

Um nun den an sich bekannten Authentisierungsvorgang (bspw. Zwei-Faktor-Authentisierung) gegenüber dem elektronischen Authentisierungsdienst vornehmen zu können, muss der Nutzer lediglich noch eine Kopplung zwischen seinem mobilen Nutzer Endgerät und dem elektronischen Ausweiselement, bspw. mittels Nahfeldkommunikation (NFC), erstellen und das Geheimnis bestätigen. Nach erfolgreicher Authentisierung wird von dem elektronischen Authentisierungsdienst eine Authentisierungsbestätigung zusammen mit dem Identifizierer an den Server des Diensteanbieters gesendet, auf dem ausgehend von der Authentisierungsbestätigung und des Identifizierers ein personalisierter Zugang für den Nutzer zur Inanspruchnahme einer Dienstleistung des Diensteanbieters geöffnet werden kann.

Die vorliegende Beschreibung deckt auch ein Computerprogramm mit Programmcode ab, der dazu geeignet ist, ein erfindungsgemäßes Verfahren auszuführen, wenn das Computerprogramm auf einem Server eines Diensteanbieters bzw. einem Server eines elektronischen Authentisierungsdienstes abläuft. Es werden sowohl das Computerprogramm selbst als auch abgespeichert auf einem computerlesbaren Medium (Computerprogrammprodukt) beansprucht.

Weitere Vorteile und Ausgestaltungen der Erfindung ergeben sich aus den Unteransprüchen, der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im folgenden unter Bezugnahme auf die Zeichnung ausführlich beschrieben.

### Kurzbeschreibung der Zeichnung

Figur 1 zeigt in stark schematischer Blockdarstellung ein erfindungsgemäßes System zur Authentisierung eines Nutzers gegenüber einem Diensteanbieter mittels eines elektronischen Ausweiselements des Nutzers.

Figur 2 zeigt stark schematisiert eine Ablaufübersicht eines erfindungsgemäßen Verfahrens.

### Ausführliche Beschreibung

Gleiche und ähnliche in den einzelnen Figuren dargestellte Merkmale sind mit gleichen Bezugszeichen bezeichnet.

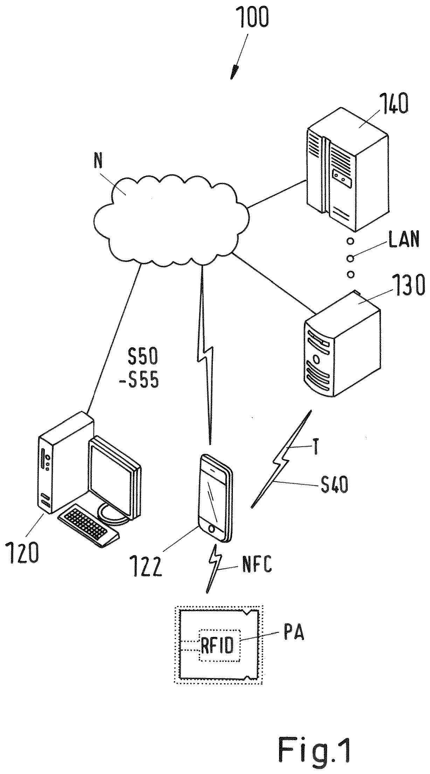

Figur 1 zeigt in stark schematisierter Blockdarstellung eine erfindungsgemäße Authentisierungseinrichtung 100. Die Authentisierungseinrichtung 100 dient zur Authentisierung eines Nutzers gegenüber einem Diensteanbieter mittels eines elektronischen Ausweiselements PA des Nutzers.

Die Authentisierungseinrichtung 100 umfasst nutzerseitig neben dem elektronischen Ausweiselements PA ein stationäres Nutzerendgerät 120 und ein mobiles Nutzerendgerät 122, das mit dem elektronischen Ausweiselement PA koppelbar ist. Diese Kopplung erfolgt wie in dem dargestellten Ausführungsbeispiel mittels sogenannter Nahfeldkommunikation NFC. Bei dem elektronischen Ausweiselement PA handelt es sich bspw. um einen elektronischen Personalausweis mit einem RFID-Chip, wie er bspw. von den Behörden der Bundesrepublik Deutschland ausgegeben wird.

Im Sinne der vorliegenden Erfindung bezeichnet der Begriff des elektronischen Ausweiselements jeglichen elektronischen Ausweis, in dem Funktionen zur elektronischen Authentisierung gegenüber Dritten zum Beispiel im Internet implementiert sind. Bei einem stationären Nutzerendgerät handelt es sich bspw. um einen Tischrechner oder PC, auch einschließlich von Laptopcomputern, und bei einem mobilen Nutzerendgerät handelt es sich bspw. um ein Mobiltelefon oder ein sogenanntes Tablet.

Anbieterseitig umfasst die erfindungsgemäße Authentisierungseinrichtung 100 einen Diensteanbieter-Server 130 und einen Authentisierungsserver 140.

Diensteanbieter, die ihren Kunden (Nutzern) die Möglichkeit der Authentisierung per elektronischem Ausweiselement anbieten, müssen sich zunächst gegenüber dem Ausweiselements mit einem Berechtigungszertifikat authentisieren und die Berechtigung zum Zugriff auf bestimmte Datenfelder des Ausweiselements nachweisen. Zur Kommunikation dem Ausweiselement benötigt der Diensteanbieter einen elektronischen Authentisierungsdienst (auch "eID-Server" genannt), der die Kommunikation mit dem Personalausweis betreibt. Diesen Authentisierungsserver kann der Diensteanbieter entweder selbst betreiben oder von externen Dienstleistern mieten.

Ein "Authentisierungsserver" ist somit im Sinne der vorliegenden Erfindung eine Vorrichtung, in der ein elektronischer Authentisierungsdienst zur Kommunikation mit einem elektronischen Ausweiselements einerseits und einem den Authentisierungsserver betreibenden bzw. mietenden Diensteanbieters andererseits implementiert ist.

Die einzelnen Komponenten der erfindungsgemäßen Authentisierungseinrichtung kommunizieren bspw. über ein Kommunikationsnetzwerk N wie das Internet bzw. über eine Mobilfunkverbindung T bzw. über die bereits erwähnte Nahfeldkommunikation NFC o.dgl.

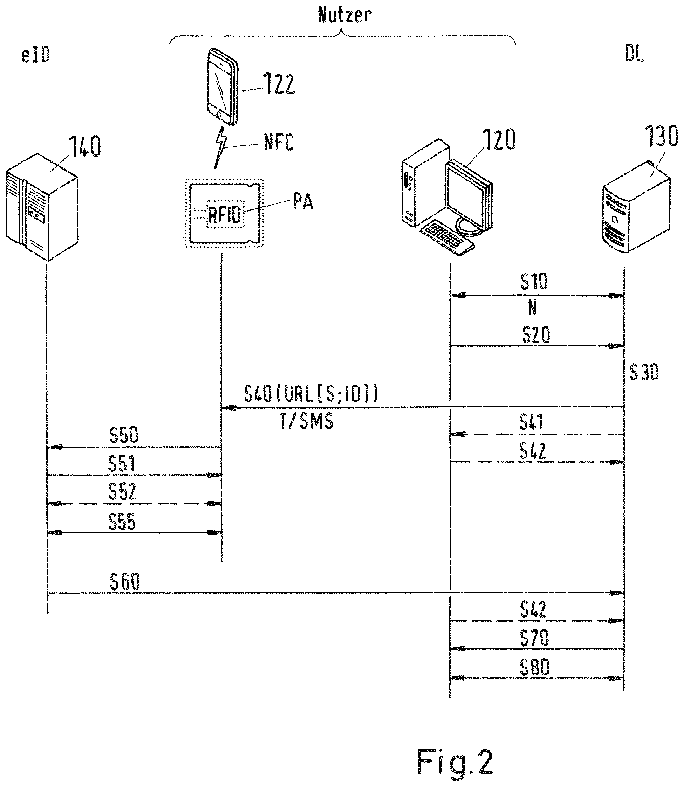

In dem dargestellten Ausführungsbeispiel wird zwischen dem stationären Nutzerendgerät 120 und dem Server 130 des Diensteanbieters eine Verbindung bspw. über das Internet N hergestellt (S10, vgl. Figur 2). Dabei kann es sich bspw. um den Besuch einer Einkaufs-Website, einer Behörden-Website o.dgl. durch den Nutzer handeln.

Zur Initialisierung eines Authentisierungprozesses gemäß der vorliegenden Erfindung übermittelt der Nutzer über diese Verbindung N eine Kontaktnummer seines mobilen Nutzerendgeräts 122 (wie insbesondere die Mobiltelefonnummer) an den Server 130 des Diensteanbieters DL (S20).

Daraufhin werden auf dem Server 130 des Diensteanbieters DL ein Geheimnis S und ein Identifizierer ID erzeugt (S30), die zusammen mit einem Hyperlink URL an das mobile Nutzerendgerät 122 übermittelt werden (S40). Die Übermittlung erfolgt vorzugsweise über eine Mobilfunkverbindung T, bspw. unter Nutzung von SMS (Kurznachrichtendienst "Short Message Service"). Das Geheimnis S dient dazu, dass der Nutzer später die beiden Sitzungen zwischen seinem stationären Endgerät 120 und dem Server 130 einerseits und zwischen seinem mobilen Endgerät 122 und dem elektronischen Authentisierungsdienst eID auf dem Authentisierungsserver 140 "zusammenführen" kann, beispielsweise unter Vergleichen und/oder Bestätigen der angezeigten Geheimnisse, wie dies nachfolgend beschrieben näher ist.

Bei Schritt S50 baut der Nutzer anhand der übermittelten URL eine Verbindung zwischen seinem mobilen Nutzerendgerät 122 und dem elektronischen Authentisierungsdienst eID auf dem Authentisierungsserver 140 auf. Zudem übermittelt der Nutzer das ihm von dem Diensteanbieter zugesandte Geheimnis S und den Identifizierer ID an den elektronischen Authentisierungsdienst. Das Geheimnis und der Identifizierer können bspw. wie voranstehend bereits erwähnt in die URL integriert sein, so dass eine "automatische" Übermittlung an den elektronischen Authentisierungsdienst erfolgt. Des weiteren stellt der Nutzer sicher, dass eine funktionsfähige Kopplung zwischen seinem elektronischen Ausweiselement PA und dem mobilen Nutzerendgerät 122 besteht.

Der elektronische Authentisierungsdienst eID (eID-Dienst/eID-Service) meldet sich bei Schritt S51 bei dem mobilen Endgerät an und die sogenannte "Ausweis-App", also die wie voranstehend bereits erwähnt zur Durchführung des an sich bekannten Authentisierungsvorgangs benötigte Softwarelösung auf dem mobilen Endgerät 122, wird gestartet und eine sichere Verbindung zwischen dem Ausweiselement PA und dem Authentisierungsdienst eID aufgebaut.

Optional wird in Schritt S52 dem Nutzer das Geheimnis S auf dem mobilen Nutzerendgerät 122 (explizit) angezeigt, damit dieser das Geheimnis als korrekt und identisch mit dem optional in Schritt S41 auf seinem stationären Endgerät 120 angezeigten Geheimnis bestätigen kann. Die Bestätigung des Geheimnisses kann als separate Einzeleingabe oder auch "implizit" über die Eingabe der PIN (s. nachfolgenden Schritt S55) erfolgen. Optional oder zusätzlich kann eine Bestätigung des Geheimnisses auch von dem stationären Endgerät 120 angefordert werden (Schritt S42).

In Schritt S55 wird der an sich bekannte Vorgang der Online-Ausweisfunktion mit Berechtigungszertifikat, PIN-Eingabe, Kryptographie, Auslesen der Daten und zu Beginn einer Anzeige des Geheimnisses (das in diesem Zusammenhang dann bspw. implizit per PIN-Eingabe bestätigt werden kann) durchgeführt.

Nach erfolgreicher Authentisierung erzeugt der eID-Service eine Authentisierungsbestätigung und schickt diese zusammen mit dem Identifizierer an den Server 130 des Diensteanbieters (S60). Mit Erhalt der Authentisierungsbestätigung zusammen mit dem Identifizierer öffnet der Server 130 einen personalisierten Zugang für das stationäre Endgerät 120 (S70), d.h. der Login des Nutzers auf der Website des Diensteanbieters ist erfolgreich abgeschlossen. Unter dem Begriff des "Öffnens" ist dabei jede an sich bekannte Art der Bereitstellung eines Zugangs zu einem über ein elektronisches Netzwerk, insbesondere über das Internet, angebotenen elektronischen Dienst zu verstehen, wie er gemeinhin mit dem Begriff des "Login" bezeichnet wird. Dies kann bspw. das Zuordnen einer eindeutigen Kennung für den Nutzer umfassen. Die Kommunikation zwischen dem Diensteanbieter-Server 130 und dem Authentisierungsserver 140 kann bspw. über eine (gesicherte) Internetverbindung N oder über ein eigenes/proprietäres Netzwerk, wie bspw. ein LAN (Local Area Network) erfolgen.

In der optionalen Variante, die eine Bestätigung des auf dem stationären Endgerät angezeigten Geheimnisses (Schritt S41) fordert, kann die Bestätigung durch den Nutzer vor oder nach der Übermittlung der Authentisierungsbestätigung in Schritt S60 erfolgen (gestrichelte Pfeile S42), sie ist jedoch auf jeden Fall Voraussetzung für den erfolgreichen Login bei S70.

Im Anschluss kann die gewünschte Transaktion zwischen Nutzer und Diensteanbieter erfolgen (S80).
Die Erfindung ermöglicht somit eine Nutzeridentifikation ausgehend von einem stationären Endgerät/Desktop-PC mittels eines mobilen Endgeräts, so dass eine Nutzeridentifikation auch an stationären Endgeräten möglich ist, die über keine Ausweiskarten-Leseeinrichtung verfügen.

## Patentansprüche

1. Verfahren zur Authentisierung eines Nutzers gegenüber einem Diensteanbieter (DL) mittels eines elektronischen Ausweiselements (PA) des Nutzers, wobei der Nutzer über ein stationäres Nutzerendgerät (120) und über ein mobiles Nutzerendgerät (122) verfügt, mit den folgenden Schritten:
Erstellen einer Verbindung (S10) zwischen dem stationären Nutzerendgerät (120) und einem Server (130) des Diensteanbieters und Mitteilen (S20) einer Kontaktnummer des mobilen Nutzerendgeräts (122) über diese Verbindung durch den Nutzer,
Erzeugen (S30) eines Geheimnisses (S) und eines Identifizierers (ID) auf dem Server (130) und Übermitteln (S40) zusammen mit einem Hyperlink (URL) an die Kontaktnummer des mobilen Nutzerendgeräts (122),
Aufbauen (S50) einer Verbindung zwischen dem mobilen Nutzerendgerät und einem elektronischen Authentisierungsdienst (eID) mittels des übermittelten Hyperlinks (URL) und Übermitteln des Geheimnisses (S) und des Identifizierers (ID) an den elektronischen Authentisierungsdienst (eID),
Erstellen einer Kopplung (NFC) zwischen dem mobilen Nutzerendgerät (122) und dem elektronischen Ausweiselement (PA),
Durchführen des Authentisierungsvorgangs (S55) unter Verwendung eines gesicherten Kanals zwischen dem elektronischen Ausweiselement und dem Authentisierungsdienst, einschließlich der Bestätigung des Geheimnisses (S) durch den Nutzer,
Senden (S60) einer Authentisierungsbestätigung zusammen mit dem Identifizierer von dem elektronischen Authentisierungsdienst (eID) an den Server (130) nach erfolgreicher Authentisierung,
Öffnen (S70) eines personalisierten Zugangs für das stationäre Nutzerendgerät (120) durch den Server (130) anhand der Authentisierungsbestätigung und des Identifizierers.

2. Verfahren zum Betreiben eines Servers (130) eines Diensteanbieters (DL) zur Authentisierung eines Nutzers mit den folgenden Schritten:
Empfangen (S20) einer Kontaktnummer eines mobilen Nutzerendgeräts (122) des zu authentisierenden Nutzers über eine Netzwerkverbindung (N), von einem stationären Nutzerendgerät (120) des Nutzers,
Erzeugen (S30) eines Geheimnisses (S) und eines Identifizierers (ID) und Übermitteln (S40) zusammen mit einem Hyperlink (URL) an die Kontaktnummer des mobilen Nutzerendgeräts (122), wobei der Hyperlink einen Verweis zu einem elektronischen Authentisierungsdienst (140/eID) enthält,
Empfangen (S60) einer Authentisierungsbestätigung zusammen mit dem Identifizierer (ID) von dem elektronischen Authentisierungsdienst (eID),
Offnen (S70) eines personalisierten Zugangs für das stationäre Nutzerendgerät (120) des authentisierten Nutzers über die Netzwerkverbindung (N) durch den Server (130) anhand der Authentisierungsbestätigung und des Identifizierers.

3. Verfahren nach Anspruch 1 oder 2, bei dem der Server (130) des Diensteanbieters das Geheimnis auch an das stationäre Nutzerendgerät sendet (S41).

4. Verfahren nach Anspruch 3, bei dem der Nutzer die Anzeige der Geheimnisse auf stationärem und mobilem Nutzerendgerät (120, 122) vergleicht und bei Übereinstimmung über das stationäre Nutzerendgerät (120) und/oder das mobile Nutzerendgerät (122) bestätigt (Schritte S42 bzw. S52)

5. Computerprogramm mit Programmcodemitteln, um alle Schritte eines Verfahrens nach einem der Ansprüche 2 bis 4 durchzuführen, wenn das Computerprogramm auf einem Diensteanbieter-Server (130) ausgeführt wird.

6. Computerprogramm nach Anspruch 5, das auf einem computerlesbaren Datenträger gespeichert ist.

7. Authentisierungseinrichtung (100) zur Authentisierung eines Nutzers gegenüber einem Diensteanbieter (DL) mittels eines elektronischen Ausweiselements (PA) des Nutzers, mit
nutzerseitig einem stationären Nutzerendgerät (120) und einem mobilen Nutzerendgerät (122) sowie einem mit dem mobilen Nutzerendgerät (122) koppelbaren elektronischen Ausweiselement (PA) und
anbieterseitig einem Server (130) des Diensteanbieters (DL) und einem Authentisierungsserver (140), wobei
das stationäre Nutzerendgerät (120) in Kommunikationsverbindung mit dem Server (130) des Diensteanbieters steht und eine Übermittlung einer Kontaktnummer des mobilen Nutzerendgeräts (122) über diese Verbindung an den Server (130) des Diensteanbieters erfolgt, und der Server (130) des Diensteanbieters dazu eingerichtet ist, auf der Grundlage der empfangenen Kontaktnummer ein Geheimnis (S) und einen Identifizierer (ID) zu erzeugen und diese zusammen mit einem Hyperlink (URL) an die Kontaktnummer des mobilen Nutzerendgeräts (122) zu übermitteln, und wobei
das mobile Nutzerendgerät (122) zum Aufbau einer Verbindung mit dem Authentisierungsserver (140) mittels des übermittelten Hyperlinks (URL) eingerichtet ist und eine Übermittlung des Geheimnisses (S) und des Identifizierers (ID) über die Verbindung an den Authentisierungsserver (140) erfolgt, der als elektronischer Authentisierungsdienst (eID) und zum Durchführen eines Authentisierungsvorgangs unter Verwendung eines gesicherten Kanals zwischen dem elektronischen Ausweiselement und dem Authentisierungsdienst, nach Bestätigung des Geheimnisses (S) durch den Nutzer, ausgebildet ist und nach erfolgreicher Authentisierung eine Authentisierungsbestätigung zusammen mit dem Identifizierer an den Server (130) des Diensteanbieters sendet, der anhand der Authentisierungsbestätigung und des Identifizierers (ID) einen personalisierten Zugang für das stationäre Nutzerendgerät (120) öffnet.

8. Diensteanbieter-Server (130) mit einem Modul zur Authentisierung eines Nutzers mittels eines elektronischen Ausweiselements (PA), wobei der Server (130) dazu ausgebildet ist,
eine Kontaktnummer eines mobilen Nutzerendgeräts (122) (122) des zu authentisierenden Nutzers über eine Netzwerkverbindung (N) von einem stationären Nutzerendgerät (120) des Nutzers zu empfangen, ein Geheimnis (S) und einen Identifizierer (ID) zu erzeugen und gemeinsam mit einem Hyperlink (URL) an die Kontaktnummer des mobilen Nutzerendgeräts (122) zu übermitteln, wobei der Hyperlink (URL) einen Verweis zu einem elektronischen Authentisierungsdienst (eID) enthält,
eine Authentisierungsbestätigung zusammen mit dem Identifizierer (ID) von dem elektronischen Authentisierungsdienst (eID) zu empfangen und
einen personalisierten Zugang für das stationäre Nutzerendgerät (120) des authentisierten Nutzer über die Netzwerkverbindung (N) anhand der Authentisierungsbestätigung und des Identifizierers (ID) zu öffnen.

## Claims

1. Method for authenticating a user with respect to a service provider (DL) by means of an electronic ID element (PA) of the user, wherein the user has a stationary user terminal (120) and a mobile user terminal (122), having the following steps of:
creating a connection (S10) between the stationary user terminal (120) and a server (130) of the service provider and communicating (S20) a contact number of the mobile user terminal (122) via this connection by the user,
generating (S30) a secret (S) and an identifier (ID) on the server (130) and transmitting (S40) them, together with a hyperlink (URL), to the contact number of the mobile user terminal (122),
setting up (S50) a connection between the mobile user terminal and an electronic authentication service (eID) by means of the transmitted hyperlink (URL) and transmitting the secret (S) and the identifier (ID) to the electronic authentication service (eID),
creating coupling (NFC) between the mobile user terminal (122) and the electronic ID element (PA),
carrying out the authentication operation (S55) using a secure channel between the electronic ID element and the authentication service, including the confirmation of the secret (S) by the user,
transmitting (S60) an authentication confirmation, together with the identifier, from the electronic authentication service (eID) to the server (130) after successful authentication,
opening (S70) personalized access for the stationary user terminal (120) by the server (130) on the basis of the authentication confirmation and the identifier.

2. Method for operating a server (130) of a service provider (DL) for the purpose of authenticating a user, having the following steps of:
receiving (S20) a contact number of a mobile user terminal (122) of the user to be authenticated from a stationary user terminal (120) of the user via a network connection (N),
generating (S30) a secret (S) and an identifier (ID) and transmitting (S40) them, together with a hyperlink (URL), to the contact number of the mobile user terminal (122), wherein the hyperlink contains a reference to an electronic authentication service (140/eID),
receiving (S60) an authentication confirmation, together with the identifier (ID), from the electronic authentication service (eID),
opening (S70) personalized access for the stationary user terminal (120) of the authenticated user via the network connection (N) by the server (130) on the basis of the authentication confirmation and the identifier.

3. Method according to Claim 1 or 2, in which the server (130) of the service provider also transmits the secret to the stationary user terminal (S41).

4. Method according to Claim 3, in which the user compares the display of the secrets on the stationary and mobile user terminals (120, 122) and, in the event of a match, confirms the secrets via the stationary user terminal (120) and/or the mobile user terminal (122) (steps S42 and S52).

5. Computer program having program code means for carrying out all steps of a method according to one of Claims 2 to 4 when the computer program is executed on a service provider server (130).

6. Computer program according to Claim 5, which is stored on a computer-readable data storage medium.

7. Authentication device (100) for authenticating a user with respect to a service provider (DL) by means of an electronic ID element (PA) of the user, having
on the user side, a stationary user terminal (120) and a mobile user terminal (122) and an electronic ID element (PA) which can be coupled to the mobile user terminal (122), and
on the provider side, a server (130) of the service provider (DL) and an authentication server (140), wherein
the stationary user terminal (120) is communicatively connected to the server (130) of the service provider, and a contact number of the mobile user terminal (122) is transmitted to the server (130) of the service provider via this connection, and the server (130) of the service provider is configured to generate a secret (S) and an identifier (ID) on the basis of the received contact number and to transmit them, together with a hyperlink (URL), to the contact number of the mobile user terminal (122), and wherein
the mobile user terminal (122) is configured to set up a connection to the authentication server (140) by means of the transmitted hyperlink (URL), and the secret (S) and the identifier (ID) are transmitted, via the connection, to the authentication server (140) which is in the form of an electronic authentication service (eID) and is designed to carry out on authentication operation using a secure channel between the electronic ID element and the authentication service after the secret (S) has been confirmed by the user and, following successful authentication, transmits an authentication confirmation, together with the identifier, to the server (130) of the service provider which opens personalized access for the stationary user terminal (120) on the basis of the authentication confirmation and the identifier (ID).

8. Service provider server (130) having a module for authenticating a user by means of an electronic ID element (PA), wherein the server (130) is configured
to receive a contact number of a mobile user terminal (122) of the user to be authenticated from a stationary user terminal (120) of the user via a network connection (N),
to generate a secret (S) and an identifier (ID) and to transmit them, together with a hyperlink (URL), to the contact number of the mobile user terminal (122), wherein the hyperlink (URL) contains a reference to an electronic authentication service (eID),
to receive an authentication confirmation, together with the identifier (ID), from the electronic authentication service (eID) and
to open personalized access for the stationary user terminal (120) of the authenticated user via the network connection (N) on the basis of the authentication confirmation and the identifier (ID).

## Revendications

1. Procédé d'authentification d'un utilisateur auprès d'un prestataire de services (DL) au moyen d'un élément d'identification électronique (PA) de l'utilisateur, l'utilisateur disposant d'un terminal utilisateur fixe (120) et d'un terminal utilisateur mobile (122), le procédé comprenant les étapes suivantes :
établir une connexion (S10) entre le terminal utilisateur fixe (120) et un serveur (130) du prestataire de services et notifier (S20) un numéro de contact du terminal utilisateur mobile (122) par le biais de cette connexion par l'utilisateur,
générer (S30) un code secret (S) et un identifiant (ID) sur le serveur (130) et transmettre (S40) conjointement avec un hyperlien (URL) au numéro de contact du terminal d'utilisateur mobile (122),
établir (S50) une connexion entre le terminal utilisateur mobile et un service d'authentification électronique (eID) au moyen de l'hyperlien (URL) transmis et transmettre le code secret (S) et l'identifiant (ID) au service d'authentification électronique (eID),
établir un couplage (NFC) entre le terminal utilisateur mobile (122) et l'élément d'identification électronique (PA),
réaliser le processus d'authentification (S55) à l'aide d'un canal sécurisé entre l'élément d'identification électronique et le service d'authentification, incluant la confirmation du code secret (S) par l'utilisateur,
envoyer (S60) une confirmation d'authentification conjointement avec l'identifiant du service d'authentification électronique (eID) au serveur (130) après une authentification réussie,
ouvrir (S70) un accès personnalisé pour le terminal utilisateur fixe (120) par le biais du serveur (130) sur la base de la confirmation d'authentification et de l'identifiant.

2. Procédé de fonctionnement d'un serveur (130) d'un prestataire de services (DL) pour authentifier un utilisateur, le procédé comprenant les étapes suivantes :
recevoir (S20) un numéro de contact d'un terminal utilisateur mobile (122) de l'utilisateur à authentifier par le biais d'une connexion réseau (N) à partir d'un terminal utilisateur fixe (120) de l'utilisateur,
générer (S30) un code secret (S) et un identifiant (ID) et transmettre (S40) conjointement avec un hyperlien (URL) au numéro de contact du terminal utilisateur mobile (122), l'hyperlien contenant une référence à un service d'authentification électronique (140/eID),
recevoir (S60) une confirmation d'authentification conjointement avec l'identifiant (ID) du service d'authentification électronique (eID),
ouvrir (S70) un accès personnalisé pour le terminal utilisateur fixe (120) de l'utilisateur authentifié par le biais de la connexion réseau (N) par le biais du serveur (130) sur la base de la confirmation d'authentification et de l'identifiant.

3. Procédé selon la revendication 1 ou 2, le serveur (130) du prestataire de services envoyant également le code secret au terminal utilisateur fixe (S41).

4. Procédé selon la revendication 3, l'utilisateur comparant entre eux les code secrets affichés sur les terminaux utilisateurs fixe et mobile (120, 122) et effectuant une confirmation, en cas de correspondance, par le biais du terminal utilisateur fixe (120) et/ou du terminal utilisateur mobile (122) (étapes S42 ou S52) .

5. Logiciel comprenant des moyens de code de programme pour réaliser toutes les étapes d'un procédé selon l'une des revendications 2 à 4 lorsque le logiciel est exécuté sur un serveur de prestataire de services (130).

6. Logiciel selon la revendication 5, qui est mémorisé sur un support de données lisible par ordinateur.

7. Dispositif d'authentification (100) destiné à authentifier un utilisateur auprès d'un prestataire de services (DL) au moyen d'un élément d'identification électronique (PA) de l'utilisateur, ledit dispositif comprenant
côté utilisateur un terminal utilisateur fixe (120) et un terminal utilisateur mobile (122) ainsi qu'un élément d'identification électronique (PA) qui peut être couplé au terminal utilisateur mobile (122) et
côté prestataire un serveur (130) du prestataire de services (DL) et un serveur d'authentification (140),
le terminal utilisateur fixe (120) étant en communication avec le serveur (130) du prestataire de services et une transmission d'un numéro de contact du terminal utilisateur mobile (122) étant effectuée par le biais de cette connexion au serveur (130) du prestataire de services, et le serveur (130) du prestataire de services étant conçu pour générer un code secret (S) et un identifiant (ID) sur la base du numéro de contact reçu et pour les transmettre conjointement avec un hyperlien (URL) au numéro de contact du terminal d'utilisateur mobile (122), et
le terminal utilisateur mobile (122) étant conçu pour établir une connexion avec le serveur d'authentification (140) au moyen de l'hyperlien transmis (URL) et pour transmettre le code secret (S) et l'identifiant (ID), par le biais de la connexion, au serveur d'authentification (140) qui est conçu comme un service d'authentification électronique (eID) et pour effectuer un processus d'authentification à l'aide d'un canal sécurisé entre l'élément d'identification électronique et le service d'authentification après confirmation du code secret (S) par l'utilisateur et, après authentification réussie, pour envoyer une confirmation d'authentification conjointement avec l'identifiant au serveur (130) du prestataire de services qui ouvre un accès personnalisé pour le terminal utilisateur fixe (120) sur la base de la confirmation d'authentification et de l'identifiant (ID).

8. Serveur de prestataire de services (130) comprenant un module d'authentification d'un utilisateur au moyen d'un élément d'identification électronique (PA), le serveur (130) étant conçu pour
recevoir un numéro de contact d'un terminal utilisateur mobile (122) de l'utilisateur à authentifier par le biais d'une connexion de réseau (N) à partir d'un terminal utilisateur fixe (120) de l'utilisateur,
générer un code secret (S) et un identifiant (ID) et les transmettre conjointement avec un hyperlien (URL) au numéro de contact du terminal mobile de l'utilisateur (122), l'hyperlien (URL) contenant une référence à un service d'authentification électronique (eID),
recevoir une confirmation d'authentification conjointement avec l'identifiant (ID) du service d'authentification électronique (eID) et
ouvrir un accès personnalisé pour le terminal utilisateur fixe (120) de l'utilisateur authentifié par le biais de la connexion réseau (N) sur la base de la confirmation d'authentification et de l'identifiant (ID).
